# EUROPEAN PATENT APPLICATION

(11) **EP 3 996 322 A1**
(43) Date of publication of application: **11.05.2022**
(21) Application number: 20205700.6
(22) Date of filing: 04.11.2020
(51) Int. Cl.: H04L 9/08, H04L 9/32

(54) **FLEXIBLE AND EFFICIENT QUANTUM KEY DISTRIBUTION (QKD)**

(71) Applicant: Deutsche Telekom AG, 53113 Bonn (DE)
(72) Inventor: WISSEL, Felix, 64372 Ober-Ramstadt (DE); GUNKEL, Matthias, 64291 Darmstadt (DE)
(74) Representative: Raible Deissler Lehmann Patentanwälte PartG mbB

(57) **Abstract**

A method for creating an encryption key according to a QKD protocol, wherein a QKD (quantum key distribution) device pair consisting of a first QKD device at a first location and a second QKD device at a second location distant from the first location together creates an encryption key according to a QKD protocol communicating via a quantum qbit channel for transmitting and receiving a qbit information and an authenticated electronic distillation channel separate from the quantum qbit channel for transmitting and receiving a protocol information, a QKD device for creating an encryption key according to a QKD protocol and a QKD system for creating an encryption key according to a QKD protocol.

## Description

The invention relates to a method for creating an encryption key according to a QKD (quantum key distribution) protocol, wherein a QKD device pair consisting of a first QKD device at a first location and a second QKD device at a second location distant from the first location together create an encryption key according to a QKD protocol communicating via a quantum qbit channel for transmitting or receiving a qbit information according to the QKD protocol and an authenticated digital distillation channel separate from the quantum qbit channel for transmitting or receiving a control information according to the QKD protocol. The invention further relates to a QKD device for creating an encryption key according to a QKD protocol and a QKD system for creating an encryption key according to a QKD protocol.

Methods of the above-mentioned type are known and used for creating encryption keys. Such a method is generally based on a two-channel communication of a QKD device pair consisting of a first QKD device and a second QKD device. Usually, the first QKD device is arranged at a first location and the second QKD device is arranged at a second location distant from the first location. The first and second QKD devices simultaneously communicate via a quantum qbit channel and an authenticated digital distillation channel according to a QKD protocol. Communicating comprises transmitting and/or receiving respective information, i.e. qbit information or control information, defined by the QKD protocol. The quantum qbit channel and the authenticated digital distillation channel are preferably established via two separate glass fibers.

The control information is digital, i.e. consists of binary values, e.g. 0 and 1. In contrast, the qbit information consists of quantum mechanical superpositions of discrete values, e.g. two orthogonal photon polarizations. Transmitting and/or receiving control information requires a bandwidth of the authenticated digital distillation channel to be in a range from 1 GBit/s to 10 GBit/s. In contrast, transmitting and/or receiving qbit information allows for a bandwidth of the quantum qbit channel to be in a range from several hundred kBit/s to few MBit/s. Correspondingly, the transmission power used by the authenticated digital distillation channel is very high as compared to the transmission power used by the quantum qbit channel.

Only the control information transmitted or received via the authenticated digital distillation channel allow the first and second QKD devices for distilling the encryption key from the qbit information transmitted or received via the quantum qbit channel. In other words, the qbit information is useless without the control information. Therefore, the channel for exchanging the control information is called digital distillation channel herein. The digital distillation channel may be public and unencrypted, but must be authenticated for the control information to be transmitted and/or received by the QKD devices.

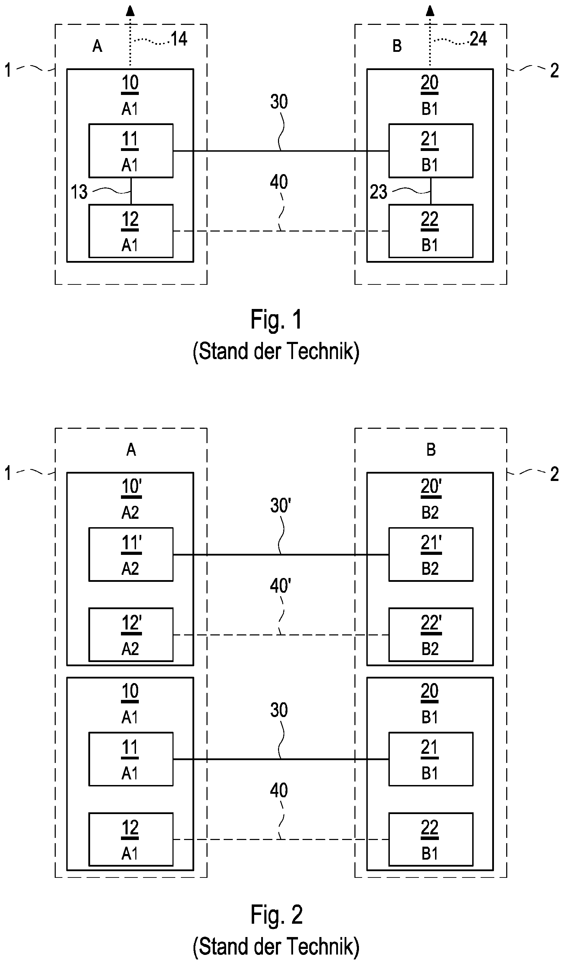

Such a method succeeds in creating an encryption key only in case the creation process is not disturbed by an intruder intercepting the encryption key creation process (man-in-the-middle attack). Any interception of the quantum qbit channel would inevitably modify the qbit information due to the quantum nature of the qbit information. The modification of the qbit information would result in an error condition defined by the QKD protocol. The encryption key creation process would terminate without successfully creating the encryption key and, hence, additionally reveal the intercepting intruder. Consequently, an encryption key successfully created by the method is a secret encryption key, i.e. a non-interceptable encryption key being exclusively known, i.e. private, to the first and second QKD devices of the QKD device pair. A prior art QKD system comprising a single QKD device pair is shown in fig. 1.

A future increasing need for encryption keys might be obviously satisfied by simply extending the QKD system described above, i.e. providing a QKD system with a higher encryption key creation capacity comprising more than one QKD device pair, i.e. a plurality of QKD device pairs. A prior art QKD system scaled like this and comprising a plurality of QKD device pairs is shown in fig. 2.

However, such an extended QKD system requires a correspondingly extended number of glass fiber pairs and, hence, is at least expensive or even practically impossible.

It is therefore an object of the invention to suggest a method for creating an encryption key according to a QKD protocol which uses glass fibers more flexibly and efficiently. Providing a QKD device for creating an encryption key according to a QKD protocol and providing a QKD system for creating an encryption key according to a QKD protocol are further objects of the invention.

One aspect of the invention is a method for creating an encryption key according to a QKD protocol, wherein a QKD device pair consisting of a first QKD device at a first location and a second QKD device at a second location distant from the first location together create an encryption key according to a QKD protocol communicating via a quantum qbit channel for transmitting or receiving a qbit information according to the QKD protocol and an authenticated digital distillation channel separate from the quantum qbit channel for transmitting or receiving a control information according to the QKD protocol. The first QKD device and the second QKD device are arranged distant from each other, e.g. at locations of an application client component at the first location and an application server component at the second location, the application requiring an encryption key for encrypting a communication between said application components. Respective application components may be connected to the first and second QKD devices via respective application interfaces of the first and second QKD devices.

The control information is digital, i.e. consists of binary values, e.g. 0 and 1. The qbit information consists of quantum mechanical superpositions of a discrete values, e.g. two orthogonal photon polarizations. Several embodiments of such methods are known in prior art. Hence, the invention may be applied to a very plurality of encryption key creation processes.

Particularly, the invention does not depend on a particular QKD protocol, but rather is generally compatible with each available or future QKD protocol defining and requiring a quantum qbit channel and a digital distillation channel. The QKD protocol may define and require a photon generating device separate from the first and second QKD device at a location distant from the first location and/or the second location, the photon generation device also communicating via the quantum qbit channel and the authenticated digital distillation channel.

According to the invention, respective protocol components of the first QKD device and the second QKD device divide the digital distillation channel into a quantum synchronous subchannel for transmitting or receiving a time-sensitive control information and a quantum asynchronous subchannel separate from the quantum synchronous subchannel for transmitting or receiving a time-insensitive control information. The control information consists of time-sensitive control information and time-insensitive control information. The time-sensitive control information is required to be synchronous with the qbit information while the time-insensitive control information may be asynchronous with the time-insensitive control information or the qbit information.

An amount of time-sensitive control information is very low as compared to an amount of time-insensitive control information for most QKD protocols. Separating the time-sensitive control information from the time-insensitive control information, hence, allows for a more flexible routing of the control information between the first and second QKD device when deploying the QKD protocol. In other words, dividing the authenticated digital distillation channel into subchannels allows for a high flexibility regarding a use of glass fibers and a great scalability regarding an increasing need for encryption keys.

In an embodiment, the quantum synchronous subchannel and the quantum qbit channel are established via two separate glass fibers of a glass fiber route, respectively. The two separate glass fibers extend in a single glass fiber route due to synchronicity requirements concerning the qbit information and the time-sensitive control information. The quantum synchronous subchannel and the quantum qbit channel only use a very small amount of a spectral capacity of a respective glass fiber. A remaining spectral capacity of the glass fiber pair may, hence, be used by further QKD device pairs allowing for an easy scaling of the QKD system.

In another embodiment, a plurality of QKD device pairs consisting of a first QKD device and a second QKD device create a plurality of encryption keys. A QKD system comprising the plurality of QKD device pairs extends a QKD system comprising a single QKD device pair in a natural way and satisfies a great need for encryption keys. In other words, an encryption key creation rate of a plurality of QKD device pairs is higher than an encryption key creation rate of a single QKD device pair. The extended QKD system may provide a plurality of applications with respective encryption keys.

Preferably, each quantum synchronous subchannel and each quantum qbit channel is established via a single glass fiber, the quantum synchronous subchannels or the quantum qbit channels being consistently selected by a first wavelength division multiplexer (WDM) at the first location and a second wavelength division multiplexer at the second location. The first and second wavelength division multiplexers are optical multiplexers and consistently assign different quantum qbit channels and quantum synchronous subchannels of the first and second QKD devices to disjoint wavelength ranges of the single glass fiber. A spectral capacity of the single glass fiber is used to a larger extent, i.e. the single glass fiber is used more efficiently. Consequently, a larger number of QKD device pairs may be connected via the single glass fiber.

A first digital multiplexer at the first location preceding the first wavelength division multiplexer and a second digital multiplexer at the second location preceding the second wavelength division multiplexer advantageously select each quantum synchronous subchannel. The first and second digital multiplexers are electronic multiplexers and consistently assign different quantum synchronous subchannels to a single wavelength range. A bandwidth of the single wavelength range is used to a larger extent, i.e. the single glass fiber is used more efficiently. Consequently, a larger number of QKD device pairs may be connected via the single glass fiber.

It is preferred that each quantum synchronous subchannel uses a transmission power as low as or essentially as low as the transmission power used by each quantum qbit channel for transmitting or receiving. The qbit information usually comprises single photons and, hence, the quantum qbit channel uses a very low transmission power. Exemplarily, a laser generating photons may be strongly damped in order to provide photon pulses with less than a single photon in the average. Setting the transmission power of the quantum synchronous subchannel very low prevents the synchronous subchannel from cross-talking to the quantum qbit channel, i.e. from disturbing the quantum qbit channel and impeding the encryption key creation process. The transmission power of the quantum synchronous subchannel may be chosen to be very low, on the one hand, due to the very low amount of time-sensitive information. The time-sensitive information may consist of a clock information and possibly a timing information defined and required by the QKD protocol. On the other hand, the distance between the first location and the second location is rather small due to the low power used by the quantum qbit channel, thus, allowing also for a low power used by the quantum synchronous subchannel.

In many embodiments each quantum synchronous subchannel uses an L1 frame for transmitting or receiving and assigns a time slot to each QKD device pair. The L1 frame is used for transmitting or receiving a not-analogous time-sensitive control information and may comprise an optical data unit (ODU) frame of an optical transport network (OTN). The L1 frame allows for a constant handling time of the time-sensitive control information. Assigning the time slots to the QKD device pairs comprises ordering and numbering the first and second QKD devices consistently, i.e. according to a common single convention. Advantageously, each quantum asynchronous subchannel is established via another single glass fiber, the quantum asynchronous subchannels being consistently selected by a third digital multiplexer at the first location followed by a third wavelength division multiplexer at the first location and a fourth digital multiplexer at the second location followed by a fourth wavelength division multiplexer at the second location. The third and fourth digital multiplexers are electronic multiplexers and consistently assign different quantum asynchronous subchannels to a single wavelength range. A bandwidth of the single wavelength range is used to a larger extent, i.e. the other single glass fiber is used more efficiently. Consequently, a larger number of QKD device pairs may be connected via the other single glass fiber. The third and fourth wavelength division multiplexers allow for additional communication channels to be established by further first devices at the first location and further second devices at the second location via the other single glass fiber.

In a preferred embodiment, each quantum asynchronous subchannel is established via a glass fiber of a glass fiber route different from a glass fiber route of the single glass fiber. In other words, a flexibility of choosing glass fiber routes is increased.

In another embodiment, each quantum asynchronous subchannel is routed via a further network node distant from the first location and the second location. A varying handling time of the time-insensitive information due to the further network nodes does not impede the encryption key creation process. In other words, the flexibility of choosing glass fiber routes is further increased.

In many embodiments, each quantum asynchronous subchannel is selected by the third digital multiplexer and the fourth digital multiplexer using an L2/ethernet algorithm or an L3/IP algorithm. Varying handling times of the time-insensitive control information caused by the L2/ethernet algorithm or the L3/IP algorithm deployed by the third and fourth digital multiplexers do not impede the encryption key creation process.

A clock information of the QKD protocol may be transmitted as a sinus wave. The clock information is transmitted for a basic synchronization of the first and second QKD devices of each QKD device pair. The clock information may be an analogue sinus wave but is not limited thereto.

Additionally, a timing information of the QKD protocol may be transmitted as a phase shift of the sinus wave or as an intensity peak overlaying the sinus wave. The timing information is transmitted for an event synchronization of the first and second QKD devices of each QKD device pair. The timing information may be an analogue phase shift or intensity peak but is not limited thereto. It is noted that the phase shift requires a more complex and expensive reception interfaces of the QKD devices. Therefore, the intensity peak is the preferred timing information.

Another aspect of the invention is a QKD device for creating an encryption key according to a QKD protocol, comprising a quantum component configured for communicating via a quantum qbit channel for transmitting or receiving a qbit information according to a QKD protocol and a protocol component configured for communicating via an authenticated digital distillation channel separate from the quantum qbit channel for transmitting or receiving a control information according to the QKD protocol. Several embodiments of such QKD devices are known in prior art. Hence, the invention may be applied to a very plurality of QKD devices. The QKD device may have more quantum components than protocol components, e.g. a single protocol component and two or more quantum components.

According to the invention, the protocol component is configured for dividing the digital distillation channel into a quantum synchronous subchannel for transmitting or receiving a time-sensitive control information and a quantum asynchronous subchannel separate from the quantum synchronous subchannel for transmitting or receiving a time-insensitive control information. The protocol component allows for a high flexibility regarding a use of glass fibers and a great scalability regarding an increasing need for encryption keys. The QKD device may be part of a QKD device pair carrying out the inventive method set forth above.

A third aspect of the invention is a QKD system for creating an encryption key according to a QKD protocol, comprising a QKD device pair consisting of an inventive first QKD device at a first location and an inventive second QKD device at a second location distant from the first location for together creating an encryption key according to a QKD protocol. Several embodiments of such QKD systems are known in prior art. Hence, the invention may be applied to a very plurality of QKD systems.

According to the invention, the QKD system is configured for carrying out an inventive method. The QKD system allows for a high flexibility regarding a use of glass fibers and a great scalability regarding an increasing need for encryption keys.

It is an essential advantage of the inventive method that spectral resources of a glass fiber route between two distant locations of a QKD device pair are reduced. Consequently, additional spectral resources are available for further devices at the two locations. Still advantageously, an amount and costs of network infrastructure may be reduced by deploying multiplexers for a better bandwidth use. Apart from that, inventive QKD systems are easily and economically integrated into an existing network infrastructure. The existing network structure is used more efficiently due to the high flexibility of choosing glass fiber routes for establishing the quantum asynchronous subchannels.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of exemplary embodiments and with reference to the drawings.
- Fig. 1: schematically shows a QKD system according to a first prior art embodiment for creating an encryption key according to a QKD protocol;
- Fig. 2: schematically shows a QKD system according to a second prior art embodiment for creating an encryption key according to a QKD protocol;
- Fig. 3: schematically shows a QKD system according to a first embodiment of the invention for creating an encryption key according to a QKD protocol;
- Fig. 4: schematically shows a QKD system according to a second embodiment of the invention for creating an encryption key according to a QKD protocol;
- Fig. 5: schematically shows a QKD system according to a third embodiment of the invention for creating an encryption key according to a QKD protocol;
- Fig. 6: shows a graph illustrating a clock information as a control information according to a QKD protocol;
- Fig. 7: shows a graph illustrating a timing information as a control information according to a QKD protocol in combination with the clock information shown in Fig. 5.

Fig. 1 schematically shows a QKD (quantum key distribution) system according to a first prior art embodiment for creating an encryption key according to a QKD protocol. The QKD system comprises a single QKD device pair consisting of two prior art QKD devices 10, 20 for together creating an encryption key according to the QKD protocol. The two prior art QKD devices 10, 20 comprise a first QKD device 10 (A1) at a first location 1 (A) which may as usually be called 'Alice' and a second QKD device 20 (B1) at a second location 2 (B) distant from the first first location 1 which may as usually be called 'Bob'.

The first QKD device 10 comprises a quantum component 12, a protocol component 11, a component interface 13 connecting the quantum component 12 and the protocol component 11 and an application interface 14 to be connected to by an application (not shown) requesting the QKD device pair to create an encryption key and using the encryption key created by the QKD device pair for encryption.

The second QKD device 20 comprises a quantum component 22, a protocol component 21, a component interface 23 connecting the quantum component 22 and the protocol component 21 and an application interface 24 to be connected to by the application.

The QKD system further comprises two separate glass fibers connecting the first QKD device 10 and the second QKD device 20. The protocol components 11, 21 of the first QKD device 10 and the second QKD device 20, respectively, are connected by a first glass fiber. The quantum components 12, 22 of the first QKD device 10 and the second QKD device 20, respectively, are connected by a second glass fiber.

The QKD device pair is configured for together creating an encryption key according to the QKD protocol communicating via a quantum qbit channel 40 for transmitting or receiving a qbit information and an authenticated digital distillation channel 30 separate from the quantum qbit channel 40 for transmitting or receiving a control information according to the QKD protocol.

The digital distillation channel 30 is established via the first glass fiber. The quantum qbit channel 40 is established via the second glass fiber.

The two separate first and second glass fibers extend in a single glass fiber route due to synchronicity requirements concerning the qbit information and the control information. The quantum qbit channel 40 uses a very low transmission power as compared to the very high transmission power used by the digital distillation channel 30.

Fig. 2 schematically shows a QKD system according to a second prior art embodiment for creating a plurality of encryption keys according to a QKD protocol. The QKD system extends the QKD system shown in Fig. 1 and comprises a plurality of QKD device pairs each QKD device pair consisting of a first QKD device 10, 10' (A1, A2) at a first location 1 (A) and a second QKD device 20, 20' (B1, B2) at a second location 2 (B) distant from the first location 1 for together creating an encryption key according to the QKD protocol. It is noted that any pair of QKD devices possibly exceeding the shown two pairs of QKD devices 10, 10', 20, 20' is omitted here also for avoiding any visual confusion.

Each first QKD device 10, 10' comprises a quantum component 12, 12' and a protocol component 11, 11', respectively. Each second QKD device 20, 20' comprises a quantum component 22, 22' and a protocol component 21, 21', respectively. It is noted that component interfaces and application interfaces as shown in Fig. 1 are omitted here for avoiding any visual confusion.

The QKD system further comprises as many separate pairs of separate glass fibers as QKD device pairs of QKD devices 10, 10', 20, 20' are comprised by the QKD system. Each pair of separate glass fibers connects exactly one pair of QKD devices 10, 10', 20, 20'. The protocol components 11, 11' of the first QKD devices 10, 10' and the protocol components 21, 21' of the second QKD devices are connected by a first glass fiber of the respective pair of glass fibers. The quantum components 12, 12' of the first QKD devices 10, 10' and the quantum components 22, 22' of the second QKD devices 20, 20' are connected by a second glass fiber of the respective pair of glass fibers.

Each pair of QKD devices 10, 10', 20, 20' is configured for together creating encryption keys according to the QKD protocol communicating via a respective quantum qbit channel 40, 40' for transmitting or receiving a qbit information and an authenticated digital distillation channel 30, 30' separate from the quantum qbit channel 40, 40' for transmitting or receiving a control information according to the QKD protocol.

The digital distillation channels 30, 30' are established via the first glass fibers. The quantum qbit channels 40, 40' are established via the second glass fibers.

Each pair of two separate first and second glass fibers extends in a single glass fiber route due to synchronicity requirements concerning the qbit information and the control information. The quantum qbit channels 40, 40' use a very low transmission power as compared to the very high transmission power used by the digital distillation channels 30, 30'.

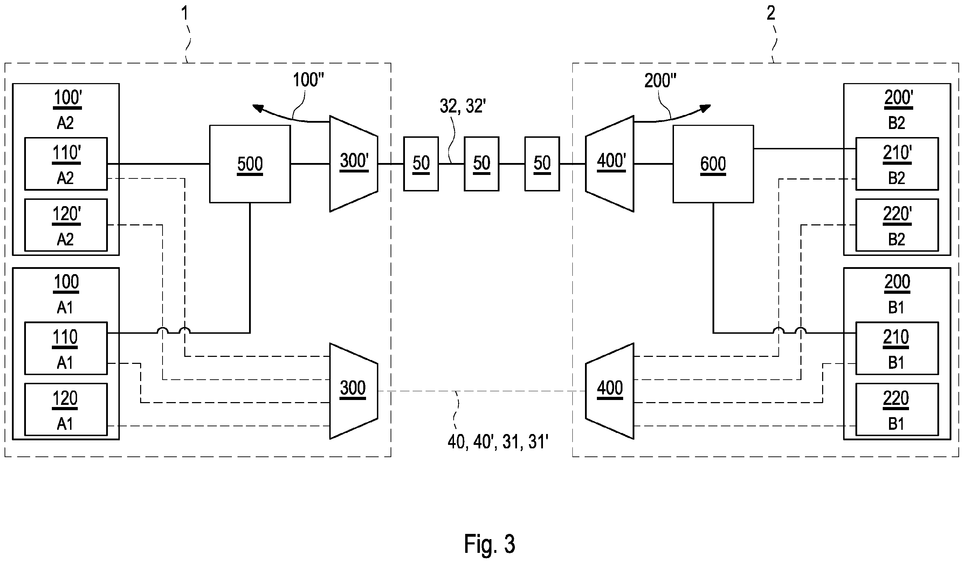

Fig. 3 schematically shows a QKD system according to a first embodiment of the invention for creating an encryption key according to a QKD protocol. The QKD system is structurally similar to the prior art QKD system shown in fig. 1 and comprises a single QKD device pair consisting of a first QKD device 100 (A1, A2) at a first location 1 (A) which may as usually be called 'Alice' and a second QKD device 200 at a second location 2 (B) distant from the first location 1 which may as usually be called 'Bob' for together creating an encryption key according to the QKD protocol.

The first QKD device 100 (A1) comprises a quantum component 120, a protocol component 110, a component interface 130 connecting the quantum component 120 and the protocol component 110 and an application interface 140 to be connected to by an application (not shown) requesting the QKD device pair to create an encryption key and using the encryption key created by the QKD device pair for encryption.

The second QKD device 200 (B1) comprises a quantum component 220, a protocol component 210, a component interface 230 connecting the quantum component 220 and the protocol component 210 and an application interface 240 to be connected to by the application.

The QKD system further comprises three separate glass fibers connecting the first QKD device 100 and the second QKD device 200. The protocol components 110, 210 of the first QKD device 100 and the second QKD device 200, respectively, are connected via a first glass fiber and a second glass fiber. The quantum components 120, 220 of the first QKD device 100 and the second QKD device 200, respectively, are connected via a third glass fiber.

The single QKD device pair is configured for together creating an encryption key according to the QKD protocol communicating via a quantum qbit channel 40 for transmitting or receiving a qbit information and an authenticated digital distillation channel 30 separate from the quantum qbit channel 40 for transmitting or receiving a control information according to the QKD protocol. The control information may comprise a clock information and a timing information. The respective protocol components 110, 210 of the first QKD device 100 and the second QKD device 200 are configured for dividing the digital distillation channel 30 into a quantum synchronous subchannel 31 for transmitting or receiving a time-sensitive control information and a quantum asynchronous subchannel 32 separate from the quantum synchronous subchannel 31 for transmitting or receiving a time-insensitive control information.

The quantum asynchronous subchannel 32 is established via the first glass fiber. The quantum synchronous subchannel 31 and the quantum qbit channel 40 are established via two separate glass fibers of a glass fiber route. The quantum synchronous subchannel 31 is established via the second glass fiber. The quantum qbit channel 40 is established via the third glass fiber.

The separate second and third glass fibers extend in a single glass fiber route due to synchronicity requirements concerning the qbit information and the time-sensitive control information. The quantum qbit channel 40 and the quantum synchronous subchannel 31 use a very low transmission power as compared to the very high transmission power used by the quantum asynchronous subchannel 32.

The QKD system is configured for carrying out the following method.

The QKD device pair together creates the encryption key according to the QKD protocol communicating via the quantum qbit channel 40 for transmitting or receiving a qbit information and an authenticated digital distillation channel 30 separate from the quantum qbit channel 40 for transmitting or receiving a control information according to the QKD protocol. The protocol components 110, 210 of the first QKD device 100 and the second QKD device 200 divide the digital distillation channel 30 into a quantum synchronous subchannel 31 for transmitting or receiving a time-sensitive protocol information and a quantum asynchronous subchannel 32 separate from the quantum synchronous subchannel 31 for transmitting or receiving a time-insensitive control information.

The quantum synchronous subchannel 31 uses a transmission power as low as or essentially as low as the transmission power used by the quantum qbit channel 40 for transmitting or receiving.

The quantum asynchronous subchannel 32 may be established via a glass fiber of a glass fiber route different from the glass fiber route of the first and second glass fibers.

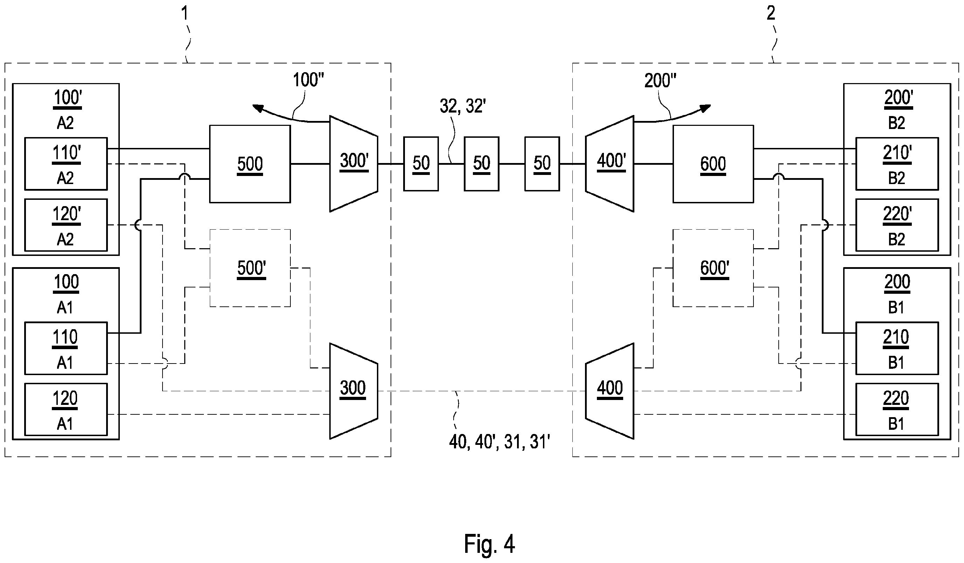

Fig. 4 schematically shows a QKD system according to a second embodiment of the invention for creating an encryption key according to a QKD protocol. The QKD system is structurally similar to the prior art QKD system shown in fig. 2 and comprises a plurality of pairs of QKD devices 100, 100', 200, 200' each pair comprising a first QKD device 100, 100' (A1, A2) at a first location 1 (A) which as usually may be called 'Alice' and a second QKD device 200, 200' (B1, B2) at a second location 2 (B) distant from the first location 1 which as usually may be called 'Bob'. It is noted that any pair of QKD devices possibly exceeding the shown two pairs of QKD devices 100, 100', 200, 200' is omitted here also for avoiding any visual confusion.

Each first QKD device 100, 100' comprises a quantum component 120, 120' configured for communicating via a quantum qbit channel 40 for transmitting or receiving a qbit information according to the quantum key creation protocol and a protocol component 110, 110' configured for communicating via an authenticated digital distillation channel 30, 30' separate from the quantum qbit channel 40 for transmitting or receiving a protocol information defined and required by the quantum key creation protocol, respectively.

Each second QKD device 200, 200' comprises a quantum component 220, 220' configured for communicating via a quantum qbit channel 40 for transmitting or receiving a qbit information according to the quantum key creation protocol and a protocol component 210, 210' configured for communicating via an authenticated digital distillation channel 30, 30' separate from the quantum qbit channel 40 for transmitting or receiving a protocol information defined and required by the quantum key creation protocol, respectively.

It is noted that component interfaces and application interfaces as shown in Fig. 3 are omitted here for avoiding any visual confusion.

Each QKD device pair is configured for together creating an encryption key according to the QKD protocol communicating via a quantum qbit channel 40 for transmitting or receiving a qbit information and an authenticated digital distillation channel 30 separate from the quantum qbit channel 40 for transmitting or receiving a control information according to the QKD protocol. Each protocol component 110, 110', 210, 210' is configured for dividing the digital distillation channel 30, 30' into a quantum synchronous subchannel 31, 31' for transmitting or receiving a time-sensitive protocol information and a quantum asynchronous subchannel 32, 32' separate from the quantum synchronous subchannel 31, 31' for transmitting or receiving a time-insensitive control information.

The QKD system further comprises a first wavelength division multiplexer (WDM) 300 at the location 1 and a second wavelength division multiplexer 400 at the location 2. The first wavelength division multiplexer 300 is connected to each protocol component 110, 110' of the first QKD devices 100, 100' and each quantum component 120, 120' of the first QKD devices 100, 100'. The second wavelength division multiplexer 400 is connected to each protocol component 210, 210' of the second QKD devices 200, 200' and each quantum component 220, 220' of the second QKD devices devices 200, 200'.

The QKD system further comprises a third digital multiplexer 500 at the location 1 and a fourth digital multiplexer 600 at the location 2. The third digital multiplexer 500 is connected to each protocol component 110, 110' of the first QKD devices 100, 100'. The fourth digital multiplexer 600 is connected to each protocol component 210, 210' of the second QKD devices 200, 200'.

The QKD system further comprises a third wavelength division multiplexer 300' at the first location 1 and a fourth wavelength division multiplexer 400' at the second location 2. The first wavelength division multiplexer 300' is connected to the third digital multiplexer 500 and may be connected to further first devices 100" at location 1 for allowing additional communication channels. The fourth wavelength division multiplexer 400' is connected to the fourth digital multiplexer 600 and may be connected to further second devices 200" at location 2 for allowing additional communication channels.

The QKD system further comprises two separate glass fibers connecting the wavelength division multiplexers 300, 300', 400, 400'. The first and second wavelength multiplexers 300, 400 are connected by a first glass fiber. The third and fourth wavelength multiplexers 300', 400' are connected by a second glass fiber. The second glass fiber may involve one or more further network nodes 50 at locations distant from the first location 1 and the second location 2.

The QKD system is configured for carrying out the following method.

The plurality of QKD device pairs creates a plurality of encryption keys. Each QKD device pair together creates an encryption key according to the QKD protocol communicating via the quantum qbit channel 40, 40' for transmitting or receiving a qbit information and an authenticated digital distillation channel 30, 30' separate from the quantum qbit channel 40, 40' for transmitting or receiving a control information according to the QKD protocol. The respective protocol components 110, 110', 210, 210' of the first QKD devices 100, 100' and the second QKD devices 200, 200' divide the digital distillation channels 30, 30' into quantum synchronous subchannels 31, 31' for transmitting or receiving a time-sensitive protocol information and quantum asynchronous subchannels 32, 32' separate from the quantum synchronous subchannels 31, 31' for transmitting or receiving a time-insensitive control information.

Each quantum synchronous subchannel 31, 31' and each quantum qbit channel 40, 40' is established via the first glass fiber, the quantum synchronous subchannels 31, 31' and the quantum qbit channels 40, 40' being consistently selected by the first wavelength division multiplexer 300 and the second wavelength division multiplexer 400.

Each quantum synchronous subchannel 31, 31' uses a transmission power as low as or essentially as low as the transmission power used by each quantum qbit channel 40, 40' for transmitting or receiving.

Each quantum synchronous subchannel 31, 31' may use an L1 frame for transmitting or receiving and assign a time slot to each QKD device pair.

Each quantum asynchronous subchannel 32, 32' is established via the second glass fiber, the quantum asynchronous subchannels 32, 32' being consistently selected by the third digital multiplexer 500 followed by the third wavelength division multiplexer 300' and the fourth digital multiplexer 600 followed by the fourth wavelength division multiplexer 400'.

Each quantum asynchronous subchannel 32, 32' may be established via a glass fiber of a glass fiber route different from the glass fiber route of the first single glass fiber.

Each quantum asynchronous subchannel 32 may be routed via the one or more further network nodes 50 distant from the first location 1 and the second location 2.

Each quantum asynchronous subchannel 32 may be selected by the third digital multiplexer 500 and the fourth digital multiplexer 600 using an L2/ethernet algorithm or an L3/IP algorithm.

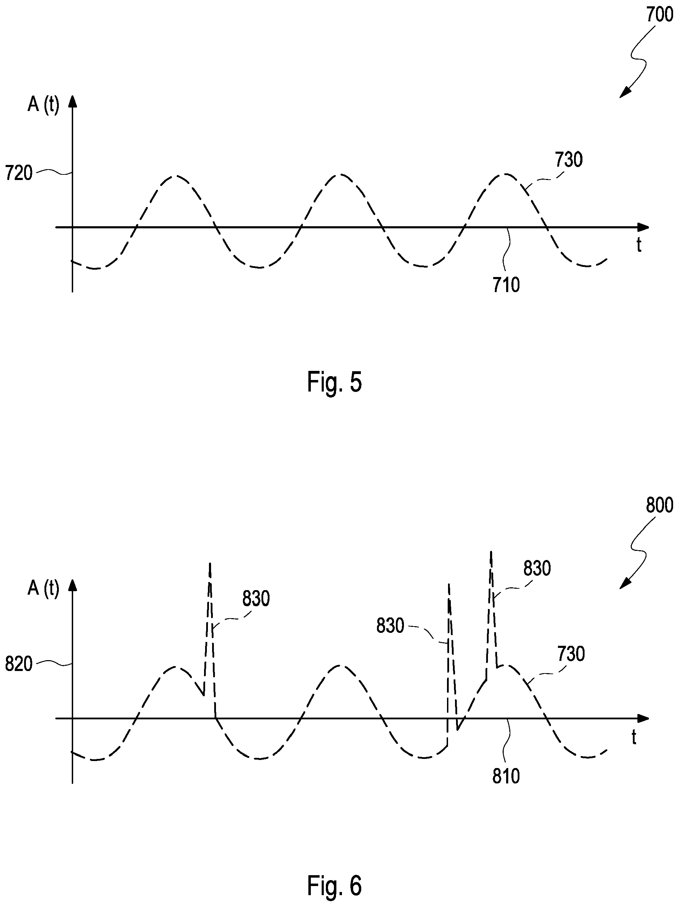

Fig. 5 schematically shows a QKD system according to a third embodiment of the invention for creating a plurality of encryption keys. The QKD system extends the QKD system shown in Fig. 4 and additionally comprises a first digital multiplexer 500' at the first location 1 and a second digital multiplexer 600' at the second location 2.

The first digital multiplexer 500' is connected to the protocol components 110, 110' of the first QKD devices 100, 100', and the first wavelength division multiplexer 300 is connected to the first digital multiplexer 500'. The second digital multiplexer 600' is connected to the protocol components 210, 210' of the second QKD devices 200, 200', and the second wavelength division multiplexer 400 is connected to the second digital multiplexer 600'. The first and second wavelength division multiplexer 300, 400 are not immediately connected to the protocol components 110, 110', 210, 210' of the first and second QKD devices 100, 100', 200, 200'.

In an additional step, the first digital multiplexer 500' preceding the first wavelength division multiplexer 300 and the second digital multiplexer 600' preceding the second wavelength division multiplexer 400 select each quantum synchronous subchannel 31, 31'.

Fig. 6 shows a graph 700 illustrating a clock information 730 as a control information according to a QKD protocol. The graph 700 comprises an abscissa 710 indicating a time t, an ordinate 720 indicating an amplitude A(t) and the clock information 730. The clock information 730 may be transmitted as a sinus wave.

Fig. 7 shows a graph 800 illustrating a timing information 830 as a control information according to a QKD protocol in combination with the clock information 730 shown in Fig. 5. The graph 800 comprises an abscissa 810 indicating a time t, an ordinate 830 indicating an amplitude A(t), the clock information 730 shown in Fig. 6 and the timing information 830. The timing information 830 may be transmitted as a plurality of intensity peaks overlaying the sinus wave. In an alternative embodiment, the timing information is transmitted as a phase shift of the sinus wave.

### Reference Numerals

- 1: first location
- 2: second location

### Prior art

- 10, 10': first QKD device
- 11, 11': protocol component
- 12, 12': quantum component
- 13: component interface
- 14: application interface
- 20, 20': second QKD device
- 21, 21': protocol component
- 22, 22': quantum component
- 23: component interface
- 24: application interface
- 30, 30': digital distillation channel
- 40, 40': quantum qbit channel

### Invention

- 100, 100': first QKD device
- 110, 110': protocol component
- 120, 120': quantum component
- 130: component interface
- 140: application interface
- 100": further first device
- 200, 200': second QKD device
- 210, 210': protocol component
- 220, 220': quantum component
- 230: component interface
- 240: application interface
- 200": further second device
- 300: first wavelength division multiplexer
- 300': third wavelength division multiplexer
- 400: second wavelength division multiplexer
- 400': fourth wavelength division multiplexer
- 500: third digital multiplexer
- 500': first digital multiplexer
- 600: fourth digital multiplexer
- 600': second digital multiplexer
- 31: quantum asynchronous subchannel
- 31': quantum asynchronous subchannel
- 32: quantum synchronous subchannel
- 32': quantum synchronous subchannel
- 40: quantum qbit channel
- 40': quantum qbit channel
- 50: further network node
- 700: graph
- 710: abscissa
- 720: ordinate
- 730: clock information
- 800: graph
- 810: abscissa
- 820: ordinate
- 830: clock information
- 840: timing information

## Claims

1. A method for creating an encryption key according to a QKD protocol, wherein
- a QKD device pair consisting of a first QKD device (100, 100') at a first location (1) and a second QKD device (200, 200') at a second location (2) distant from the first location (1) together creates an encryption key according to a QKD protocol communicating via a quantum qbit channel (40, 40') for transmitting or receiving a qbit information and an authenticated digital distillation channel (30, 30') separate from the quantum qbit channel (40, 40') for transmitting or receiving a control information according to the QKD protocol;
- respective protocol components (110, 110', 210, 210') of the first QKD device (100, 100') and the second QKD device (200, 200') divide the digital distillation channel (30, 30') into a quantum synchronous subchannel (31, 31') for transmitting or receiving a time-sensitive control information and a quantum asynchronous subchannel (32, 32') separate from the quantum synchronous subchannel (31, 31') for transmitting or receiving a time-insensitive control information.

2. The method according to claim 1, wherein the quantum synchronous subchannel (31) and the quantum qbit channel (40) are established via two separate glass fibers of a glass fiber route, respectively.

3. The method according to claim 1, wherein a plurality of QKD device pairs consisting of a first QKD device (100, 100') and a second QKD device (200, 200') create a plurality of encryption keys.

4. The method according to claim 3, wherein each quantum synchronous subchannel (31, 31') and each quantum qbit channel (40, 40') is established via a single glass fiber, the quantum synchronous subchannels (31, 31') and the quantum qbit channels (40, 40') being consistently selected by a first wavelength division multiplexer (300) at the first location (1) and a second wavelength division multiplexer (400) at the second location (2).

5. The method according to claim 4, wherein a first digital multiplexer (500') at the first location (1) preceding the first wavelength division multiplexer (300) and a second digital multiplexer (600') at the second location (2) preceding the second wavelength division multiplexer (400) select each quantum synchronous subchannel (31, 31').

6. The method according to one of claims 1 to 5, wherein each quantum synchronous subchannel (31, 31') uses a transmission power as low as or essentially as low as the transmission power used by each quantum qbit channel (40, 40') for transmitting or receiving.

7. The method according to claim 6, wherein each quantum synchronous subchannel (31, 31') uses a L1 frame for transmitting or receiving and assigns a time slot to each QKD device pair.

8. The method according to one of claims 1 to 7, wherein each quantum asynchronous subchannel (32, 32') is established via another single glass fiber, the quantum asynchronous subchannels (32, 32') being consistently selected by a third digital multiplexer (500) at the first location (1) followed by a third wavelength division multiplexer (300') at the first location (1) and a fourth digital multiplexer (600) at the second location (2) followed by a fourth wavelength division multiplexer (400') at the second location (2).

9. The method according to claim 8, wherein each quantum asynchronous subchannel (32, 32') is established via a glass fiber of a glass fiber route different from a glass fiber route of the single glass fiber.

10. The method according to claim 9, wherein each quantum asynchronous subchannel (32, 32') is routed via a further network node (50) distant from the first location (1) and the second location (2).

11. The method according to one of claims 8 to 10, wherein each quantum asynchronous subchannel (32, 32') is selected by the third digital multiplexer (500) and the fourth digital multiplexer (600) using an L2/ethernet algorithm or an L3/IP algorithm.

12. The method according to one of claims 1 to 11, wherein a clock information (730) as a control information according to the QKD protocol is transmitted as a sinus wave.

13. The method according to claim 12, wherein a timing information (840) as a control information of the QKD protocol is transmitted as a phase shift of the sinus wave or as an intensity peak overlaying the sinus wave.

14. A QKD device (100, 100', 200, 200') for creating an encryption key according to a QKD protocol, comprising a quantum component (120, 120', 220, 220') configured for communicating via a quantum qbit channel (40, 40') for transmitting or receiving a qbit information according to a QKD protocol and a protocol component (110, 110', 210, 210') configured for communicating via an authenticated digital distillation channel (30, 30') separate from the quantum qbit channel (40, 40') for transmitting or receiving a control information according to the QKD protocol, wherein the protocol component is configured for dividing the digital distillation channel (30, 30') into a quantum synchronous subchannel (31, 31') for transmitting or receiving a time-sensitive control information and a quantum asynchronous subchannel (32, 32') separate from the quantum synchronous subchannel (31, 31') for transmitting or receiving a time-insensitive control information.

15. A QKD system for creating an encryption key according to a QKD protocol, comprising a QKD device pair consisting of a first QKD device (100, 100') according to claim 14 at a first location (1) and a second QKD device (200, 200') according to claim 14 at a second location (2) distant from the first location (1) for together creating an encryption key according to a QKD protocol, wherein the QKD system is configured for carrying out a method according to claims 1 to 13.

## Amended claims

### Amended claims in accordance with Rule 137(2) EPC.

1. A method for creating an encryption key according to a QKD protocol, wherein
- a QKD device pair consisting of a first QKD device (100, 100') at a first location (1) and a second QKD device (200, 200') at a second location (2) distant from the first location (1) together creates an encryption key according to a QKD protocol communicating via a quantum qbit channel (40, 40') for transmitting or receiving a qbit information and an authenticated digital distillation channel (30, 30') separate from the quantum qbit channel (40, 40') for transmitting or receiving a control information according to the QKD protocol;
- respective protocol components (110, 110', 210, 210') of the first QKD device (100, 100') and the second QKD device (200, 200') divide the digital distillation channel (30, 30') into a quantum synchronous subchannel (31, 31') for transmitting or receiving a time-sensitive control information and a quantum asynchronous subchannel (32, 32') separate from the quantum synchronous subchannel (31, 31') for transmitting or receiving a time-insensitive control information.

2. The method according to claim 1, wherein the quantum synchronous subchannel (31) and the quantum qbit channel (40) are established via two separate glass fibers of a glass fiber route, respectively.

3. The method according to claim 1, wherein a plurality of QKD device pairs consisting of a first QKD device (100, 100') and a second QKD device (200, 200') create a plurality of encryption keys.

4. The method according to claim 3, wherein each quantum synchronous subchannel (31, 31') and each quantum qbit channel (40, 40') is established via a single glass fiber, the quantum synchronous subchannels (31, 31') and the quantum qbit channels (40, 40') being consistently selected by a first wavelength division multiplexer (300) at the first location (1) and a second wavelength division multiplexer (400) at the second location (2).

5. The method according to claim 4, wherein a first digital multiplexer (500') at the first location (1) preceding the first wavelength division multiplexer (300) and a second digital multiplexer (600') at the second location (2) preceding the second wavelength division multiplexer (400) select each quantum synchronous subchannel (31, 31').

6. The method according to one of claims 1 to 5, wherein each quantum synchronous subchannel (31, 31') uses a transmission power as low as or essentially as low as the transmission power used by each quantum qbit channel (40, 40') for transmitting or receiving.

7. The method according to claim 6, wherein each quantum synchronous subchannel (31, 31') uses a L1 frame for transmitting or receiving and assigns a time slot to each QKD device pair.

8. The method according to one of claims 1 to 7, wherein each quantum asynchronous subchannel (32, 32') is established via another single glass fiber, the quantum asynchronous subchannels (32, 32') being consistently selected by a third digital multiplexer (500) at the first location (1) followed by a third wavelength division multiplexer (300') at the first location (1) and a fourth digital multiplexer (600) at the second location (2) followed by a fourth wavelength division multiplexer (400') at the second location (2).

9. The method according to claim 8, wherein each quantum asynchronous subchannel (32, 32') is established via a glass fiber of a glass fiber route different from a glass fiber route of the single glass fiber.

10. The method according to claim 9, wherein each quantum asynchronous subchannel (32, 32') is routed via a further network node (50) distant from the first location (1) and the second location (2).

11. The method according to one of claims 8 to 10, wherein each quantum asynchronous subchannel (32, 32') is selected by the third digital multiplexer (500) and the fourth digital multiplexer (600) using an L2/ethernet algorithm or an L3/IP algorithm.

12. The method according to one of claims 1 to 11, wherein a clock information (730) as a control information according to the QKD protocol is transmitted as a sinus wave.

13. The method according to claim 12, wherein a timing information (840) as a control information of the QKD protocol is transmitted as a phase shift of the sinus wave or as an intensity peak overlaying the sinus wave.

14. A QKD device (100, 100', 200, 200') adapted for creating an encryption key according to a QKD protocol, comprising a quantum component (120, 120', 220, 220') configured for communicating via a quantum qbit channel (40, 40') for transmitting or receiving a qbit information according to a QKD protocol and a protocol component (110, 110', 210, 210') configured for communicating via an authenticated digital distillation channel (30, 30') separate from the quantum qbit channel (40, 40') for transmitting or receiving a control information according to the QKD protocol, wherein the protocol component is configured for dividing the digital distillation channel (30, 30') into a quantum synchronous subchannel (31, 31') for transmitting or receiving a time-sensitive control information and a quantum asynchronous subchannel (32, 32') separate from the quantum synchronous subchannel (31, 31') for transmitting or receiving a time-insensitive control information.

15. A QKD system adapted for creating an encryption key according to a QKD protocol, comprising a QKD device pair consisting of a first QKD device (100, 100') according to claim 14 at a first location (1) and a second QKD device (200, 200') according to claim 14 at a second location (2) distant from the first location (1) for together creating an encryption key according to a QKD protocol, wherein the QKD system is configured for carrying out a method according to claims 1 to 13.
